# EUROPEAN PATENT SPECIFICATION

(11) **EP 2 429 090 B1**
(45) Date of publication and mention of the grant of the patent: **05.02.2020**
(21) Application number: 10772035.1
(22) Date of filing: 07.05.2010
(51) Int. Cl.: H04J 11/00, H04B 1/707, H04B 7/26, H04L 27/26, H04L 5/00

(54) **METHOD FOR TRANSMITTING/RECEIVING SOUNDING REFERENCE SIGNAL (SRS), MOBILE COMMUNICATION TERMINAL AND BASE STATION**
VERFAHREN ZUM SENDEN/EMPFANGEN VON REFERENZTONSIGNALEN, MOBILES KOMMUNIKATIONSENDGERÄT UND BASISSTATION
PROCÉDÉ D'ÉMISSION/RÉCEPTION DE SIGNAL DE RÉFÉRENCE DE SONDAGE (SRS), TERMINAL DE COMMUNICATION MOBILE ET STATION DE BASE

(30) Priority: 07.05.2009 CN 200910083872
(43) Date of publication of application: 14.03.2012
(73) Proprietor: China Mobile Communications Corporation, Beijing 100032 (CN)
(72) Inventor: HU, Zhenping, Beijing 100032 (CN); XU, Xiaodong, Beijing 100032 (CN)
(74) Representative: Manitz Finsterwald Patent- und Rechtsanwaltspartnerschaft mbB
(86) International application number: PCT/CN2010/072505
(87) International publication number: WO 2010/127632

(56) References cited:
- EP-A1- 1 942 623
- WO-A2-2007/136212
- WO-A2-2009/019062
- CN-A- 101 159 488
- CN-A- 101 330 325
- CN-A- 101 330 325
- CN-A- 101 404 794
- HUAWEI: "System performance evaluation for uplink CoMP", 3GPP DRAFT; R1-091618, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul, Korea; 20090328, 28 March 2009 (2009-03-28), XP050339161, [retrieved on 2009-03-28]

## Description

### Field

The present invention relates to mobile communication technologies and particularly to a control technology of Sounding Reference Signal (SRS). The features of the preamble of the independent claims are known from CN 101 330 325 A. Related technologies are known from EP 1 942 623 A1, WO 2009/019062 A2, WO 2007/136212 A2 and HUAWEI: "System performance evaluation for uplink CoMP", 3GPP DRAFT; R1-091618, Mobile Competence Centre; 650, Route Des Lucioles; F-06921 Sophia-Antipolis Cedex; France, no. Seoul, Korea; 28 March 2009, XP050339161.

### Background

In comparison with the Beyond Third Generation (B3G) mobile communication system, the International Mobile Telecommunications-Advanced (IMT-Advanced) system of the International Telecommunication Union (ITU) and the Long Term Evolution 3GPP-Advanced (LTE-Advanced) system of the 3GPP require a higher cell spectrum efficiency and edge-user spectrum efficiency, but a lower base-station transmission power and delay. To meet such a requirement, Coordinated Multi Point (CoMP) is extensively discussed and is generally regarded as one of the key technologies that fulfill 4G requirements.

In a CoMP system, a user may be served by multiple cells, which may belong to the same base station or different base stations. In uplink CoMP, signals from the same user are received by multiple coordinated cells, so that the quality of uplink-received signals may be improved. In the case of CoMP multi-cell coordinated reception, the base station will select multiple serving cells for a specific user. In this case, the user may perform uplink synchronization with one serving cell, and this cell is referred to as a synchronized cell of the user. Because the time that a user's signal arrives at a non-synchronized cell is up to the distance between the user and the non-synchronized cell, the user's signal may arrive outside a Cyclic Prefix (CP) of an OFDM (Orthogonal Frequency Division Multiplexing) symbol of the cell, that is, the user's signal may arrive before or after the CP window. It can be seen from link level simulation that, the detection performance of a signal that arrives outside a CP window of an OFDM symbol will become very poor, thus the effect of CoMP multi-cell coordinated reception will be degraded. Therefore, when the base station selects serving cells set for a user, it first needs to measure the quality and relative delay of links between the user and each,cell, thereby it may guarantee that the user data can arrive within the range of the CP window of all serving cells and the channel quality meets the requirements.

A Sounding Reference signal (SRS) transmitted by a user is used for measuring the quality of a channel within a specific bandwidth. A base station schedules appropriate time-frequency resources for the user according to the SRS measurement result. It has been specified in Release 8 of 3GPP LTE that a SRS transmission position is generally at the last OFDM symbol of each subframe, and the user is indicated of the subframe position for transmitting an SRS signal by configuring the periodicity of the SRS signal transmission and the offset of the first subframe for transmitting the SRS signal. Each user periodically transmits an SRS signal within a specific bandwidth according to the configured transmission periodicity of the SRS signal.

The SRS signal may be used for measuring the quality and relative delay of links between the user and each cell. However, it was found by the inventors that the existing SRS is only designed for measuring the link quality of the serving cell, thus the CP length of the SRS signal is the same as the CP length of signals on other OFDM symbols. If the SRS signal is used for measuring the link quality of coordinated cells, it may need to overcome longer multi-path delay and the interference from e.g. data channels, control channels, reference signal of coordinated cells, thus measurement of coordinated cell link quality may be better performed by using an SRS signal with an extended CP. At the same time, the relative delay between the user and each cell is obtained via a CP-based method, thus the delay difference between the user and the cell may be better estimated by using an SRS signal with an extended CP. Usually, the CP length of an OFDM symbol is determined according to such information as the coverage radius, multi-path delay and so on of the serving cell; a CP with a certain length, i.e., a normal CP or an extended CP, is selected in one cell, rather than configuring CPs with different lengths at the same time. In such a case, if a normal CP is configured in the serving cell and coordinated cells, an OFDM symbol with an extended CP cannot be transmitted due to the total time limitation of the subframe. Therefore, the link quality and relative delays of coordinated cells cannot be estimated by using an extended CP SRS signal.

### Summary

The present invention is defined in the independent claims. Embodiments of the invention provides a method for transmitting and receiving an SRS, which is used for realizing the flexible configuration of an SRS signal with extended CP or a normal CP, aiming at the goal of estimating the link quality and relative delays of coordinated cells by using an extended CP SRS signal.

A method for a mobile communication terminal to transmit an SRS, including:
obtaining transmission position indication information of extended CP SRS signals and normal CP SRS signals;
determining sequence numbers of subframes for transmitting the extended CP SRS signals and the normal CP SRS signals in each radio frame according to the transmission position indication information; and
transmitting the extended CP SRS signals and the normal CP SRS signals respectively according to the sequence numbers of the subframes for transmitting the extended CP SRS signals and the normal CP SRS signals.

A mobile communication terminal, including:
a unit for obtaining transmission position indication information of extended CP SRS signals and normal CP SRS signals;
a unit for determining sequence numbers of subframes for transmitting the extended CP SRS signals and the normal CP SRS signals in each radio frame according to the transmission position indication information; and
a unit for transmitting the extended CP SRS signals and the normal CP SRS signals respectively according to the sequence numbers of the subframes for transmitting the extended CP SRS signals and the normal CP SRS signals.

A method for a base station to receive an SRS, including:
determining, for a mobile communication terminal, transmission position indication information of extended CP SRS signals and normal CP SRS signals;
transmitting the transmission position indication information to the mobile communication terminal; and
receiving the extended CP SRS signals and the normal CP SRS signals respectively transmitted by the mobile communication terminal according to the transmission position indication information.

A base station, including:
a unit for determining for a mobile communication terminal transmission position indication information of extended CP SRS signals and normal CP SRS signals;
a unit for transmitting the transmission position indication information to the mobile communication terminal; and
a unit for receiving the extended CP SRS signals and the normal CP SRS signals respectively transmitted by the mobile communication terminal according to the transmission position indication information.

In the embodiments of the invention, extended CP SRS signals required for estimating the link quality and delay information of users in coordinated cells can be transmitted by a mobile communication terminal according to the transmission position indication information of extended CP SRS signals and normal CP SRS signals from a base station, without changing the CP length required for other data transmission in coordinated cells; moreover, when the CP of the uplink OFDM symbol of the cell is configured as a CP with normal length, the CP length of the SRS signal may be configured flexibly. Therefore, according to the technical solutions provided in the embodiments of the invention, the same indication is respectively given to all users participating in CoMP coordination, thereby providing conditions for the application of CoMP technologies.

### Brief Description of the Drawings

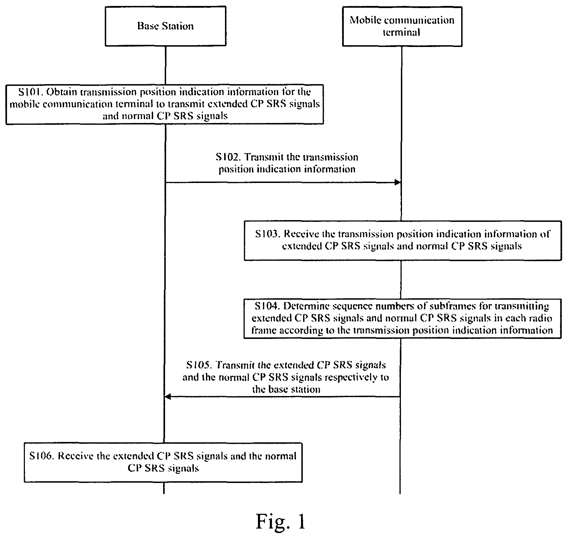

Fig. 1 is a schematic flow chart of an SRS signal transmission mechanism according to an embodiment of the invention.

### Detailed Description

In the embodiments of the invention, in order to allow that an extended CP is configured for certain SRS signals with specific positions when a normal CP is configured for an uplink OFDM symbol in a cell so as to measure and estimate the link quality and relative delay of coordinated cells, the transmission position indication information of extended CP SRS signals and normal CP SRS signals is delivered to the mobile communication terminal of a user via a base station of the cell for indicating positions of subframes for transmitting the extended CP SRS signals and the normal CP SRS signals, and the mobile communication terminal of the user transmits the extended CP SRS signals and the normal CP SRS signals to the base station respectively according to the transmission position indication information. Alternatively, the transmission position indication information of the extended CP SRS signals and the normal CP SRS signals is stored in advance on the mobile communication terminal as a configuration parameter, and the mobile communication terminal determines the positions of the subframes for transmitting the extended CP SRS signals and the normal CP SRS signals according to the configuration parameter prestored and transmits the extended CP SRS signals and the normal CP SRS signals to the base station respectively.

Specific illustrations will be given below via an example in which a base station delivers the transmission position indication information of extended CP SRS signals and normal CP SRS signals to a mobile communication terminal of a user.

As shown in Fig. 1, the technical solution according to one embodiment of the invention includes the following operations 101 to 106.
Operation 101: A base station obtains transmission position indication information for a mobile communication terminal to transmit extended CP SRS signals and normal CP SRS signals;
Operation 102: The base station transmits the transmission position indication information to the mobile communication terminal;
Operation 103: The mobile communication terminal receives the transmission position indication information of the extended CP SRS signals and the normal CP SRS signals from the base station;
Operation 104: Sequence numbers of subframes for transmitting the extended CP SRS signals and the normal CP SRS signals are determined in each radio frame according to the transmission position indication information;
Operation 105: The extended CP SRS signals and the normal CP SRS signals are transmitted to the base station respectively according to the sequence numbers of the subframes for transmitting the extended CP SRS signals and the normal CP SRS signals; and
Operation 106: The base station receives the extended CP SRS signals and the normal CP SRS signals transmitted by the mobile communication terminal.

In the embodiment of the invention, the mobile communication terminal needs to determine the positions of subframes for transmitting the extended CP SRS signals and the positions of subframes for transmitting the normal CP SRS signals according to the transmission position indication information of the extended CP SRS signals and the normal CP SRS signals transmitted by the base station, and there may exist many indication modes, for example, the following modes 1) to 8).

Mode 1) The transmission position indication information of the extended CP SRS signals and the normal CP SRS signals includes: a transmission periodicity for transmitting the SRS signals, an offset of a subframe for transmitting the first SRS signal, and position indication information of subframes for respectively transmitting the extended CP SRS signals or the normal CP SRS signals in subframes for transmitting the SRS signals in one radio frame, wherein the transmission periodicity for transmitting the SRS signals is a common divisor of one radio frame length;

In the first mode, the mobile communication terminal may determine respective positions of subframes for transmitting the SRS signals according to the transmission periodicity for transmitting the SRS signals and the offset of the subframe for transmitting the first SRS signal, and may further distinguish between subframes for transmitting the extended CP SRS signals or the normal CP SRS signals according to the position indication information of subframes for respectively transmitting the extended CP SRS signals or the normal CP SRS signals in respective subframes for transmitting the SRS signals in one radio frame.

Specifically, for example, the transmission periodicity of the SRS signals is 5 ms, and the offset of the subframe for transmitting the first SRS signal is 2, then sequence numbers of subframes for transmitting the SRS signals are the 2^{nd} subframe, the 7^{th} subframe, the 12^{th} subframe and so on after receiving the transmission position indication information. Because in the first mode, the transmission periodicity of the SRS signals is a common divisor of one radio frame length, for example, when the radio frame length is 10 ms, the transmission periodicity of the SRS signals may be 2 ms and 5 ms, the distribution of subframes for transmitting the SRS signals in a radio frame is constant, and the subframes for transmitting the extended CP SRS signals or the normal CP SRS signals in each radio frame may be further distinguished by indicating the positions of subframes for respectively transmitting the extended CP SRS signals or the normal CP SRS signals in subframes for transmitting the SRS signals in the radio frame.

For example, when the length of one radio frame is 10 ms and the transmission periodicity for transmitting the SRS signals is 5 ms, because 10 subframes are contained in one radio frame, two subframes for transmitting the SRS signals should be contained in each radio frame; a bitmap method is employed, and 2-bit indication information is used to identify whether the corresponding subframe will be utilized to transmit an extended CP SRS signal, for example, 1 identifies that an extended CP SRS signal will be transmitted, 0 identifies that no extended CP SRS signal will be transmitted, then 10 identifies that the first subframe for transmitting the SRS signal should transmit an extend SRS signal and the second subframe for transmitting the SRS signal should transmit a normal SRS signal; if the indication information is 00, both the subframes should transmit a normal SRS signal.

For example, when the length of one radio frame is 10 ms and the transmission periodicity for transmitting the SRS signal is 2 ms, because 10 subframes are contained in one radio frame, 5 subframes for transmitting the SRS signals should be contained in each radio frame; a bitmap method is employed, and 5-bit indication information is used to identify whether the corresponding subframe will be utilized to transmit an extended CP SRS signal, for example, 1 identifies that an extended CP SRS signal will be transmitted, 0 identifies that no extended CP SRS signal will be transmitted, then 10100 identifies that the first and the third subframes for transmitting the SRS signals in one radio frame should be utilized to transmit extend SRS signals and the remaining three subframes for transmitting the SRS signals should be utilized to transmit normal SRS signals; if the indication information is 00, both the subframes should transmit a normal SRS signal. Or, 00001 identifies that, except that the last subframe for transmitting the SRS signal should be utilized to transmit an extend SRS signal, the remaining four subframes for transmitting the SRS signals should all be utilized to transmit normal SRS signals. Or, 00000 identifies that 5 subframes for transmitting the SRS signals in one radio frame should all be utilized to transmit normal SRS signals.

Mode 2) The transmission position indication information of the extended CP SRS signals and the normal CP SRS signals includes: a transmission periodicity for transmitting the SRS signals and a offset of a subframe for transmitting the first SRS signal in one radio frame, and position indication information of subframes for respectively transmitting the extended CP SRS signals or the normal CP SRS signals in subframes for transmitting the SRS signals.

In the second mode, the transmission periodicity of the SRS signals and the offset of the first subframe for transmitting the SRS signal are indicated by taking one radio frame as the unit, thus it may be unnecessary to define that the transmission periodicity of the SRS signals must be a common divisor of one radio frame length.

In the above two modes, the transmission periodicity of the SRS signals and the offset of the subframe for transmitting the first SRS signal may be obtained from a parameter configuration message transmitted by a base station; and the position indication information of subframes may be obtained from another parameter configuration message transmitted by the base station. Alternatively, the base station may carry all the transmission position indication information in one parameter configuration message and transmits it to the mobile communication terminal.
Mode 3) The transmission position indication information of the extended CP SRS signals and the normal CP SRS signals may include: a transmission periodicity of the SRS signals, an offset of a subframe for transmitting the first extended CP SRS signal in one transmission periodicity, and a transmission periodicity of the extended CP SRS signals; wherein the transmission periodicity of the SRS signals is a common divisor of one radio frame length, and the transmission periodicity of the extended CP SRS signals is an integral multiple of the transmission periodicity of the SRS signals;
Mode 4) The transmission position indication information of the extended CP SRS signals and the normal CP SRS signals may further include: a transmission periodicity of the SRS signals, an offset of a subframe for transmitting the first normal CP SRS signal in one transmission periodicity, and a transmission periodicity of the normal CP SRS signals; wherein the transmission periodicity of the SRS signals is a common divisor of one radio frame length, and the transmission periodicity of the normal CP SRS signals is an integral multiple of the transmission periodicity of the SRS signals;

The difference between the above third and fourth modes and the former modes described above lies in that, on the basis that the transmission periodicity of the SRS signals is indicated, the transmission periodicity of the extended CP SRS signals or the transmission periodicity of the normal CP SRS signals is further indicated; for example, the transmission periodicity of the SRS signals is 5 ms, and the transmission periodicity of the extended CP SRS signals or the transmission periodicity of the normal CP SRS signals is 10 ms, which means that the extended CP SRS signals and the normal CP SRS signals are transmitted in turn. In another example, the transmission periodicity of the SRS signals is 5 ms, and the transmission periodicity of the extended CP SRS signals is 20 ms, which means that one extended CP SRS signal is transmitted after each 3 normal CP SRS signals are transmitted. It determines whether the first SRS signal in one transmission periodicity is a normal CP SRS signal or an extended CP SRS signal according to the offset of the subframe for transmitting the first extended CP SRS signal or the offset of the subframe for transmitting the first normal SRS signal.
Mode 5) The transmission position indication information of the extended CP SRS signals and the normal CP SRS signals may include: in one radio frame, a transmission periodicity for transmitting the SRS signals, an offset of a subframe for transmitting the first extended CP SRS signal, and a transmission periodicity for transmitting the extended CP SRS signals, wherein the transmission periodicity of the extended CP SRS signals is an integral multiple of the transmission periodicity of the SRS signals;
Mode 6) The transmission position indication information of the extended CP SRS signals and the normal CP SRS signals may include: in one radio frame, a transmission periodicity for transmitting the SRS signals, an offset of a subframe for transmitting the first normal CP SRS signal, and a transmission periodicity for transmitting the normal CP SRS signals, wherein the transmission periodicity of the normal CP SRS signals is an integral multiple of the transmission periodicity of the SRS signals.

In the fifth and sixth modes, the transmission periodicity of the SRS signals and the offset of the subframe for transmitting the first SRS signal are indicated by taking one radio frame as the unit, thus it may be unnecessary to define that the transmission periodicity of the SRS signals must be a common divisor of one radio frame length.

In the above two modes, the transmission periodicity of the SRS signals and the offset of the subframe for transmitting the first extended or normal CP SRS signal are obtained from a first parameter configuration message transmitted by a base station; and the transmission periodicity of the extended CP SRS signals or the transmission periodicity of the normal CP SRS signals are obtained from a second parameter configuration message transmitted by the base station. Alternatively, the transmission position indication information may all be obtained from one parameter configuration message transmitted by the base station.

Mode 7) The transmission position indication information of the extended CP SRS signals and the normal CP SRS signals may include: in each radio frame, sequence numbers of subframes for transmitting the extended CP SRS signals and sequence numbers of subframe for transmitting the normal CP SRS signals; thus, when the extended CP SRS signals and the normal CP SRS signals are respectively transmitted according to the transmission position indication information, the subframes for transmitting the extended CP SRS signals and the subframes for transmitting the normal CP SRS signals in each radio frame may be determined respectively according to the sequence numbers of subframes in the transmission position indication information.

In this mode, the transmission position of each extended CP SRS signal or normal CP SRS signal may be set flexibly as required, and the total number of SRS signals transmitted by the mobile communication terminal is also controllable.

Mode 8) The transmission position indication information of the extended CP SRS signals and the normal CP SRS signals may include: in each radio frame, sequence numbers of subframes for transmitting the extended CP SRS signals; thus, when the extended CP SRS signals and the normal CP SRS signals are respectively transmitted according to the transmission position indication information, subframes for the extended CP SRS signals in each radio frame may be firstly determined according to the sequence number of the subframes in the transmission position indication information, and all the subframes except for the subframes for transmitting the extended CP SRS signals are used to transmit normal CP SRS signals.

In this mode, the total number of SRS signals transmitted by the mobile communication terminal equals to the number of subframes, thus only the sequence numbers of the subframes for transmitting the extended CP SRS signals in each radio frame need to be indicated. Alternatively, sequence numbers of subframes for transmitting the normal CP SRS signals in one radio frame may be indicated.

Moreover, in order to realize a more flexible control mechanism of SRS signals, the base station may further use an independent signaling to indicate whether the mobile communication terminal transmits an extended CP SRS signals at predetermined transmission positions; for example, a 1-bit signaling is used for indication, 1 indicates transmitting and 0 indicates no transmitting, then before transmitting the extended CP SRS signals according to the transmission position indication information, the mobile communication terminal confirms whether the transmission indication signaling is received; if no transmission indication signaling is received, a normal CP SRS signal or no SRS signal may be transmitted on the position for transmitting an extended CP SRS signal.

In an embodiment of the invention, an extended CP SRS signal needs to occupy two OFDM symbols with normal CP length, that is, in the corresponding subframe, an extended CP SRS signal needs to be transmitted in the time length of two OFDM symbols with normal CP length, wherein the two OFDM symbols with normal CP length may be any two OFDM symbols with normal CP length in the corresponding subframe, which generally may be predefined as the last two symbols. Or, the two OFDM symbols with normal CP length that the extended CP SRS signal needs to occupy may be the last OFDM symbol with normal CP length in the subframe for transmitting the extended CP SRS signal and the first OFDM symbol with normal CP length in the adjacent next subframe. A normal CP SRS signal only needs to occupy one OFDM symbol with normal CP length in the corresponding subframe, for example, the last OFDM symbol with normal CP length. The position of the specific OFDM symbols in the subframe occupied by the extended CP SRS signal or the normal CP SRS signal may be preconfigured as a configuration parameter on a mobile terminal and a base station.

It should be noted that, the duration of two OFDM symbols with normal CP length occupied by one extended CP SRS signal may be in alignment with two OFDM symbols with normal CP at the starting point or at the end point, or it may start from the middle thereof or end at the middle thereof. Therefore, an extended CP SRS may occupy a part or all of a previous OFDM symbol with normal CP length or a next OFDM symbol with normal CP length.

It should be especially noted that, as configured by the cell, the CP length of other OFDM symbols in the subframe for transmitting the extended CP SRS signal may be a normal CP length or an extended CP length. Moreover, in the case that the CP of an uplink OFDM symbol in a cell is preconfigured as the normal CP length, an SRS signal at a certain position may be flexibly specified as the extended CP SRS signal according to the technical solutions provided in the embodiments of the invention.

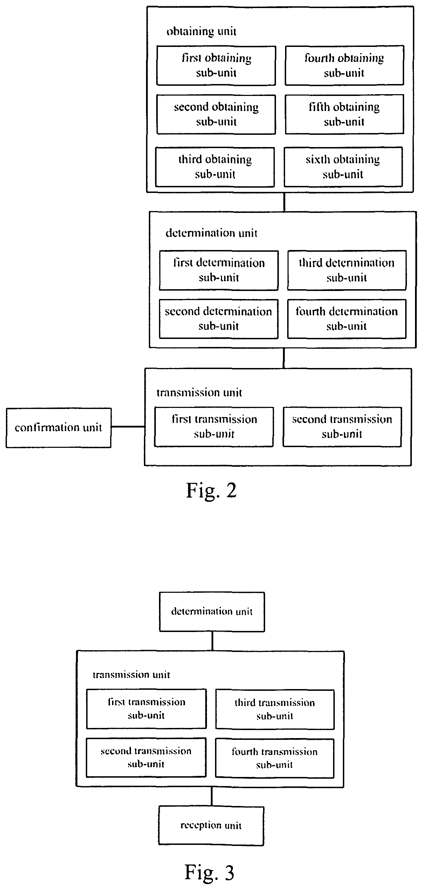

Further, an embodiment of the invention provides a mobile communication terminal, as illustrated in Fig. 2, which includes:
an obtaining unit for obtaining transmission position indication information of extended CP SRS signals and normal CP SRS signals;
a determination unit for determining sequence numbers of subframes for transmitting the extended CP SRS signals and the normal CP SRS signals in each radio frame according to the transmission position indication information; and
a transmission unit for transmitting the extended CP SRS signals and the normal CP SRS signals respectively according to the sequence numbers of the subframes for transmitting the extended CP SRS signals and the normal CP SRS signals.

Preferably, if the transmission position indication information of the extended CP SRS signals and the normal CP SRS signals includes: a transmission periodicity for transmitting the SRS signals, an offset of a subframe for transmitting the first SRS signal, and position indication information of subframes, contained in one radio frame, for respectively transmitting the extended CP SRS signals or the normal CP SRS signals, wherein, the transmission periodicity for transmitting the SRS signals is a common divisor of the length of one radio frame; or includes: a transmission periodicity for transmitting the SRS signals and an offset of a subframe for transmitting the first SRS signal in one radio frame, and position indication information of subframes, contained in one radio frame, for respectively transmitting the extended CP SRS signals or the normal CP SRS signals, the obtaining unit includes:
a first obtaining sub-unit for obtaining the transmission periodicity for transmitting the SRS signals and the offset of the subframe for transmitting the first SRS signal from a first parameter configuration message transmitted by a base station; and
a second obtaining sub-unit for obtaining the position indication information of subframes from a second parameter configuration message transmitted by the base station.

Preferably, if the transmission position indication information of the extended CP SRS signals and the normal CP SRS signals includes: a transmission periodicity for transmitting the SRS signals, an offset of a subframe for transmitting the first extended CP SRS signal, and a transmission periodicity for transmitting the extended CP SRS signals, wherein, the transmission periodicity for transmitting the SRS signals is a common divisor of the length of one radio frame, and the transmission periodicity for transmitting the extended CP SRS signals is an integral multiple of the transmission periodicity for transmitting the SRS signals; or includes: a transmission periodicity for transmitting the SRS signals, an offset of a subframe for transmitting the first normal SRS signal, and a transmission periodicity for transmitting the normal CP SRS signals, wherein, the transmission periodicity for transmitting the SRS signals is a common divisor of the length of one radio frame, and the transmission periodicity for transmitting the normal CP SRS signals is an integral multiple of the transmission periodicity for transmitting the SRS signals; or includes: a transmission periodicity for transmitting the SRS signals and an offset of a subframe for transmitting the first extended CP SRS signal in one radio frame, and a transmission periodicity for transmitting the extended CP SRS signals in one radio frame, wherein, the transmission periodicity for transmitting the extended CP SRS signals is an integral multiple of the transmission periodicity for transmitting the SRS signals; or includes: a transmission periodicity for transmitting the SRS signals and an offset of a subframe for transmitting the first normal SRS signal in one radio frame, and a transmission periodicity for transmitting the normal CP SRS signals in one radio frame, wherein, the transmission periodicity for transmitting the normal CP SRS signals is an integral multiple of the transmission periodicity for transmitting the SRS signals, the obtaining unit includes:
a third obtaining sub-unit for obtaining the transmission periodicity for transmitting the SRS signals and the offset of the subframe for transmitting the first SRS signal from a first parameter configuration message transmitted by a base station; and
a fourth obtaining sub-unit for obtaining the transmission periodicity for transmitting the extended CP SRS signals or the transmission periodicity for transmitting the normal CP SRS signals from a second parameter configuration message transmitted by the base station.

Preferably, if the transmission position indication information of the extended CP SRS signals and the normal CP SRS signals includes: sequence numbers of subframes for transmitting the extended CP SRS signals in one radio frame, the determination unit includes:
a first determination sub-unit for determining sequence numbers of subframes for transmitting the extended CP SRS signals in each radio frame according to the sequence numbers of subframes in the transmission position indication information; and
a second determination sub-unit for determining subframes for transmitting the normal CP SRS signals in each radio frame to be all the subframes except for the subframes for transmitting the extended CP SRS signals.

Preferably, if the transmission position indication information of the extended CP SRS signals and the normal CP SRS signals includes: sequence numbers of subframes for transmitting the normal CP SRS signals in one radio frame, the determination unit includes:
a third determination sub-unit for determining sequence numbers of subframes for transmitting the normal CP SRS signals in each radio frame according to the sequence numbers of subframes in the transmission position indication information; and
a fourth determination sub-unit for determining subframes for transmitting the extended CP SRS signals in each radio frame to be all the subframes except for the subframes for transmitting the normal CP SRS signals.

Preferably, the obtaining unit includes:
a fifth obtaining sub-unit for obtaining the transmission position indication information from a configuration parameter prestored on the mobile communication terminal; or
a sixth obtaining sub-unit for obtaining the transmission position indication information from a configuration parameter received from a base station.

Preferably, the mobile communication terminal further includes: a confirmation unit for, before transmitting the extended CP SRS signals and the normal CP SRS signals respectively according to the sequence numbers of subframes for transmitting the extended CP SRS signals and the normal CP SRS signals, confirming that indication information for transmitting the extended CP SRS signals is received from the base station.

Preferably, the transmission unit includes:
a first transmission sub-unit for transmitting an extended CP SRS signal on a time length of two OFDM symbols with normal CP length in a subframe for transmitting the extended CP SRS signal or on a time length of the last OFDM symbol with normal CP length in the subframe for transmitting the extended CP SRS signal and the first OFDM symbol with normal CP length in an adjacent next subframe, according to the sequence number of subframe for transmitting the extended CP SRS signal; and
a second transmission sub-unit for transmitting a normal CP SRS signal on a time length of one OFDM symbol with normal CP length in a subframe for transmitting the normal CP SRS signal, according to the sequence number of subframe for transmitting the normal CP SRS signal.

A base station, as illustrated in Fig. 3, which includes:
a determination unit for determining, for a mobile communication terminal, transmission position indication information of extended CP SRS signals and normal CP SRS signals;
a transmission unit for transmitting the transmission position indication information to the mobile communication terminal; and
a reception unit for receiving the extended CP SRS signals and the normal CP SRS signals respectively transmitted by the mobile communication terminal according to the transmission position indication information.

Preferably, if the transmission position indication information of the extended CP SRS signals and the normal CP SRS signals includes: a transmission periodicity for transmitting the SRS signals, an offset of a subframe for transmitting the first SRS signal, and position indication information of subframes, contained in one radio frame, for respectively transmitting the extended CP SRS signals or the normal CP SRS signals, wherein, the transmission periodicity for transmitting the SRS signals is a common divisor of one radio frame length; or includes: a transmission periodicity for transmitting the SRS signals and an offset of a subframe for transmitting the first SRS signal in one radio frame, and position indication information of subframes, contained in one radio frame, for respectively transmitting the extended CP SRS signals or the normal CP SRS signals, the transmission unit includes:
a first transmission sub-unit for carrying the transmission periodicity for transmitting the SRS signals and the offset of the subframe for transmitting the first SRS signal in a first parameter configuration message and transmitting the first parameter configuration message to the mobile communication terminal; and
a second transmission sub-unit for carrying the position indication information of subframes in a second parameter configuration message and transmitting the second parameter configuration message to the mobile communication terminal.

Preferably, if the transmission position indication information of the extended CP SRS signals and the normal CP SRS signals includes: a transmission periodicity for transmitting the SRS signals, an offset of a subframe for transmitting the first extended CP SRS signal, and a transmission periodicity for transmitting the extended CP SRS signals, wherein, the transmission periodicity for transmitting the SRS signals is a common divisor of the length of one radio frame, and the transmission periodicity for transmitting the extended CP SRS signals is an integral multiple of the transmission periodicity for transmitting the SRS signals; or includes: a transmission periodicity for transmitting the SRS signals, an offset of a subframe for transmitting the first normal SRS signal, and a transmission periodicity for transmitting the normal CP SRS signals, wherein, the transmission periodicity for transmitting the SRS signals is a common divisor of the length of one radio frame, and the transmission periodicity for transmitting the normal CP SRS signals is an integral multiple of the transmission periodicity for transmitting the SRS signals; or includes: a transmission periodicity for transmitting the SRS signals and an offset of a subframe for transmitting the first extended CP SRS signal in one radio frame, and a transmission periodicity for transmitting the extended CP SRS signals in one radio frame, wherein, the transmission periodicity for transmitting the extended CP SRS signal is an integral multiple of the transmission periodicity for transmitting the SRS signals; or includes: a transmission periodicity for transmitting the SRS signals and an offset of a subframe for transmitting the first normal CP SRS signal in one radio frame, and a transmission periodicity for transmitting the normal CP SRS signals in one radio frame, wherein, the transmission periodicity for transmitting the normal CP SRS signals is an integral multiple of the transmission periodicity for transmitting the SRS signals, the transmission unit includes:
a third transmission sub-unit for carrying the transmission periodicity for transmitting the SRS signals and the offset of the subframe for transmitting the first SRS signal in a first parameter configuration message and transmitting the first parameter configuration message to the mobile communication terminal; and
a fourth transmission sub-unit for carrying the transmission periodicity for transmitting the extended CP SRS signals or the transmission periodicity for transmitting the normal CP SRS signals in a second parameter configuration message and transmitting the second parameter configuration message to the mobile communication terminal.

In the embodiments of the invention, a mobile communication terminal may transmit extended CP SRS signals required for estimating the link quality and delay information of users in coordinated cells according to the transmission position indication information of extended CP SRS signals and normal CP SRS signals from a base station, without changing the CP length required for other data transmission in coordinated cells, and the same indication is given to all users participating in CoMP coordination, thereby providing conditions for the application of CoMP technologies.

Apparently, various modifications and variations may be made by those skilled in the art without departing from the scope of the invention. Thus, if these modifications and variations fall in the range as defined by the claims and their equivalents, these modifications and variations are intended to be contemplated by the invention.

## Claims

1. A method for a mobile communication terminal to transmit a Sounding Reference Signal, SRS, **characterized by** comprising:
obtaining (S103) transmission position indication information of extended Cyclic Prefix, CP, SRS signals and normal CP SRS signals; wherein the transmission position indication information of the extended CP SRS signals and the normal CP SRS signals comprises: sequence numbers of subframes for transmitting the extended CP SRS signals and sequence numbers of subframes for transmitting the normal CP SRS signals in one radio frame;
determining (SI04) sequence numbers of subframes for transmitting the extended CP SRS signals and the normal CP SRS signals in each radio frame according to the transmission position indication information; and
transmitting (S105) the extended CP SRS signals and the normal CP SRS signals respectively in the same radio frame, according to the sequence numbers of subframes for transmitting the extended CP SRS signals and the normal CP SRS signals.

2. The method of claim 1, wherein, if the transmission position indication information of the extended CP SRS signals and the normal CP SRS signals comprises:
a transmission periodicity for transmitting the SRS signals, an offset of a subframe for transmitting the first SRS signal, and position indication information of subframes, contained in one radio frame, for respectively transmitting the extended CP SRS signals or the normal CP SRS signals, wherein, the transmission periodicity for transmitting the SRS signals is a common divisor of the length of one radio frame;
or comprises:
a transmission periodicity for transmitting the SRS signals and an offset of a subframe for transmitting the first SRS signal in one radio frame, and position indication information of subframes, contained in one radio frame, for respectively transmitting the extended CP SRS signals or the normal CP SRS signals,
the transmission periodicity for transmitting the SRS signals and the offset of the subframe for transmitting the first SRS signal are obtained from a first parameter configuration message transmitted by a base station; and
the position indication information of subframes is obtained from a second parameter configuration message transmitted by the base station.

3. The method of claim 1, wherein, if the transmission position indication information of the extended CP SRS signals and the normal CP SRS signals comprises:
a transmission periodicity for transmitting the SRS signals, an offset of a subframe for transmitting the first extended CP SRS signal, and a transmission periodicity for transmitting the extended CP SRS signals, wherein, the transmission periodicity for transmitting the SRS signals is a common divisor of one radio frame length, and the transmission periodicity for transmitting the extended CP SRS signals is an integral multiple of the transmission periodicity for transmitting the SRS signals;
or comprises:
a transmission periodicity for transmitting the SRS signals, an offset of a subframe for transmitting the first normal SRS signal, and a transmission periodicity for transmitting the normal CP SRS signals, wherein, the transmission periodicity for transmitting the SRS signals is a common divisor of one radio frame length, and the transmission periodicity for transmitting the normal CP SRS signals is an integral multiple of the transmission periodicity for transmitting the SRS signals;
or comprises:
a transmission periodicity for transmitting the SRS signals and an offset of a subframe for transmitting the first extended CP SRS signal in one radio frame, and a transmission periodicity for transmitting the extended CP SRS signals in one radio frame, wherein, the transmission periodicity for transmitting the extended CP SRS signals is an integral multiple of the transmission periodicity for transmitting the SRS signals;
or comprises:
a transmission periodicity for transmitting the SRS signals and an offset of a subframe for transmitting the first normal SRS signal in one radio frame, and a transmission periodicity for transmitting the normal CP SRS signals in one radio frame, wherein, the transmission periodicity for transmitting the normal CP SRS signals is an integral multiple of the transmission periodicity for transmitting the SRS signals,
the transmission periodicity for transmitting the SRS signals and the offset of the subframe for transmitting the first SRS signal are obtained from a first parameter configuration message transmitted by a base station; and
the transmission periodicity for transmitting the extended CP SRS signals or the transmission periodicity for transmitting the normal CP SRS signals is obtained from a second parameter configuration message transmitted by the base station.

4. The method of claim 1, wherein, if the transmission position indication information of the extended CP SRS signals and the normal CP SRS signals comprises: sequence numbers of subframes for transmitting the extended CP SRS signals in-one radio frame,
the determining sequence numbers of subframes for transmitting the extended CP SRS signals and the normal CP SRS signals in each radio frame according to the transmission position indication information specifically comprises: determining sequence numbers of subframes for transmitting the extended CP SRS signals in each radio frame according to the sequence numbers of subframes in the transmission position indication information; and determining subframes for transmitting the normal CP SRS signals in each radio frame to be all the subframes except for the subframes for transmitting the extended CP SRS signals;
or
if the transmission position indication information of the extended CP SRS signals and the normal CP SRS signals comprises: sequence numbers of subframes for transmitting the normal CP SRS signals in one radio frame;
the determining sequence numbers of subframes for transmitting the extended CP SRS signals and the normal CP SRS signals in each radio frame according to the transmission position indication information specifically comprises: determining sequence numbers of subframes for transmitting the normal CP SRS signals in each radio frame according to the sequence numbers of subframes in the transmission position indication information; and determining subframes for transmitting the extended CP SRS signals in each radio frame to be all the subframes except for the subframes for transmitting the normal CP SRS signals.

5. The method of any one of claims 1 to 4, wherein:
the transmission position indication information is obtained from a configuration parameter prestored on the mobile communication terminal or from a configuration parameter received from a base station.

6. The method of any one of claims 1 to 5, further comprising: before transmitting (S105) the extended CP SRS signals and the normal CP SRS signals respectively in the same radio frame, according to the sequence numbers of subframes for transmitting the extended CP SRS signals and the normal CP SRS signals, confirming that indication information for transmitting the extended CP SRS signals is received from the base station.

7. The method of any one of claims 1 to 6, wherein, the transmitting (S105) the extended CP SRS signals and the normal CP SRS signals respectively in the same radio frame, according to the sequence numbers of subframes for transmitting the extended CP SRS signals and the normal CP SRS signals specifically comprises:
transmitting an extended CP SRS signal on a time length of two OFDM symbols with normal CP length in a subframe for transmitting the extended CP SRS signal or on a time length of the last OFDM symbol with normal CP length in the subframe for transmitting the extended CP SRS signal and the first OFDM symbol with normal CP length in an adjacent next subframe, according to the sequence number of subframe for transmitting the extended CP SRS signal; and
transmitting a normal CP SRS signal on a time length of one OFDM symbol with normal CP length in a subframe for transmitting the normal CP SRS signal, according to the sequence number of subframe for transmitting the normal CP SRS signal.

8. The method of claim 7, wherein, a CP of other OFDM symbols for transmitting non-SRS signals in the subframe for transmitting the extended CP SRS signal is a CP with normal length.

9. The method of claim 7, wherein, the time length of two OFDM symbols with normal CP length in the subframe for transmitting the extended CP SRS signal is: a time length of the last two OFDM symbols with normal CP length in the subframe for transmitting the extended CP SRS signal; and
the time length of one OFDM symbol with normal CP length in the subframe for transmitting the normal CP SRS signal is: a time length of the last OFDM symbol with normal CP length in the subframe for transmitting the normal CP SRS signal.

10. A mobile communication terminal, **characterized by** comprising:
a unit for obtaining transmission position indication information of extended Cyclic Prefix, CP, Sounding Reference Signal, SRS, signals and normal CP SRS signals; wherein the transmission position indication information of the extended CP SRS signals and the normal CP SRS signals comprises: sequence numbers of subframes for transmitting the extended CP SRS signals and sequence numbers of subframes for transmitting the normal CP SRS signals in one radio frame;
a unit for determining sequence numbers of subframes for transmitting the extended CP SRS signals and the normal CP SRS signals in each radio frame according to the transmission position indication information; and
a unit for transmitting the extended CP SRS signals and the normal CP SRS signals respectively in the same radio frame, according to the sequence numbers of subframes for transmitting the extended CP SRS signals and the normal CP SRS signals.

11. A method for a base station to receive a Sounding Reference Signal, SRS, **characterized by** comprising:
determining (S101), for a mobile communication terminal, transmission position indication information of extended Cyclic Prefix, CP, SRS signal and normal CP SRS signals; wherein the transmission position indication information of the extended CP SRS signals and the normal CP SRS signals comprises: sequence numbers of subframes for transmitting the extended CP SRS signals and sequence numbers of subframes for transmitting the normal CP SRS signals in one radio frame;
transmitting (S102) the transmission position indication information to the mobile communication terminal; and
receiving (S106) the extended CP SRS signals and the normal CP SRS signals respectively transmitted in the same radio frame by the mobile communication terminal according to the transmission position indication information.

12. The method of claim 11, wherein, if the transmission position indication information of the extended CP SRS signals and the normal CP SRS signals comprises:
a transmission periodicity for transmitting the SRS signals, an offset of a subframe for transmitting the first SRS signal, and position indication information of subframes, contained in one radio frame, for respectively transmitting the extended CP SRS signals or the normal CP SRS signals, wherein, the transmission periodicity for transmitting the SRS signals is a common divisor of one radio frame length;
or comprises:
a transmission periodicity for transmitting the SRS signals and an offset of a subframe for transmitting the first SRS signal in one radio frame, and position indication information of subframes, contained in one radio frame, for respectively transmitting the extended CP SRS signals or the normal CP SRS signals,
the transmitting the transmission position indication information to the mobile communication terminal specifically comprises:
carrying the transmission periodicity for transmitting the SRS signals and the offset of the subframe for transmitting the first SRS signal in a first parameter configuration message and transmitting the first parameter configuration message to the mobile communication terminal; and
carrying the position indication information of subframes in a second parameter configuration message and transmitting the second parameter configuration message to the mobile communication terminal.

13. The method of claim 11, wherein, if the transmission position indication information of the extended CP SRS signals and the normal CP SRS signals comprises:
a transmission periodicity for transmitting the SRS signals, an offset of a subframe for transmitting the first extended CP SRS signal, and a transmission periodicity for transmitting the extended CP SRS signals, wherein, the transmission periodicity for transmitting the SRS signals is a common divisor of one radio frame length, and the transmission periodicity for transmitting the extended CP SRS signals is an integral multiple of the transmission periodicity for transmitting the SRS signals;
or comprises:
a transmission periodicity for transmitting the SRS signals, an offset of a subframe for transmitting the first normal SRS signal, and a transmission periodicity for transmitting the normal CP SRS signals, wherein, the transmission periodicity for transmitting the SRS signals is a common divisor of one radio frame length, and the transmission periodicity for transmitting the normal CP SRS signals is an integral multiple of the transmission periodicity for transmitting the SRS signals;
or comprises:
a transmission periodicity for transmitting the SRS signals and an offset of a subframe for transmitting the first extended CP SRS signal in one radio frame, and a transmission periodicity for transmitting the extended CP SRS signals in one radio frame, wherein, the transmission periodicity for transmitting the extended CP SRS signal is an integral multiple of the transmission periodicity for transmitting the SRS signals;
or comprises:
a transmission periodicity for transmitting the SRS signals and an offset of a subframe for transmitting the first normal CP SRS signal in one radio frame, and a transmission periodicity for transmitting the normal CP SRS signals in one radio frame, wherein, the transmission periodicity for transmitting the normal CP SRS signals is an integral multiple of the transmission periodicity for transmitting the SRS signals,
the transmitting the transmission position indication information to the mobile communication terminal specifically comprises:
carrying the transmission periodicity for transmitting the SRS signals and the offset of the subframe for transmitting the first SRS signal in a first parameter configuration message and transmitting the first parameter configuration message to the mobile communication terminal; and
carrying the transmission periodicity for transmitting the extended CP SRS signals or the transmission periodicity for transmitting the normal CP SRS signals in a second parameter configuration message and transmitting the second parameter configuration message to the mobile communication terminal.

14. A base station, **characterized by** comprising:
a unit for determining, for a mobile communication terminal, transmission position indication information of extended Cyclic Prefix, CP, Sounding Reference Signal, SRS, signals and normal CP SRS signals; wherein the transmission position indication information of the extended CP SRS signals and the normal CP SRS signals comprises: sequence numbers of subframes for transmitting the extended CP SRS signals and sequence numbers of subframes for transmitting the normal CP SRS signals in one radio frame;
a unit for transmitting the transmission position indication information to the mobile communication terminal; and
a unit for receiving the extended CP SRS signals and the normal CP SRS signals respectively transmitted in the same radio frame by the mobile communication terminal according to the transmission position indication information.

## Patentansprüche

1. Verfahren für ein mobiles Kommunikationsendgerät zum Übertragen eines sondierenden Referenzsignals, SRS, **dadurch gekennzeichnet, dass** es umfasst:
Erhalten (S103) von Übertragungspositions-Anzeigeinformationen von SRS-Signalen mit erweitertem zyklischen Präfix, erweiterten CP-SRS-Signalen, und von normalen CP-SRS-Signalen; wobei die Übertragungspositions-Anzeigeinformationen der erweiterten CP-SRS-Signale und der normalen CP-SRS-Signale umfassen: Sequenznummern von Teilrahmen zum Übertragen der erweiterten CP-SRS-Signale und Sequenznummern von Teilrahmen zum Übertragen der normalen CP-SRS-Signale in einem Funkrahmen;
Bestimmen (S104) von Sequenznummern von Teilrahmen zum Übertragen der erweiterten CP-SRS-Signale und der normalen CP-SRS-Signale in jedem Funkrahmen gemäß den Übertragungspositions-Anzeigeinformationen; und
Übertragen (S105) der erweiterten CP-SRS-Signale und der normalen CP-SRS-Signale jeweils in dem gleichen Funkrahmen gemäß den Sequenznummern der Teilrahmen zum Übertragen der erweiterten CP-SRS-Signale und der normalen CP-SRS-Signale.

2. Verfahren nach Anspruch 1, wobei, wenn die Übertragungspositions-Anzeigeinformationen der erweiterten CP-SRS-Signale und der normalen CP-SRS-Signale umfassen:
eine Übertragungsperiodizität zum Übertragen der SRS-Signale, einen Versatz eines Teilrahmens zum Übertragen des ersten SRS-Signals, und Positionsanzeigeinformationen von Teilrahmen, die in einem Funkrahmen enthalten sind, zum jeweiligen Übertragen der erweiterten CP-SRS-Signale oder der normalen CP-SRS-Signale, wobei die Übertragungsperiodizität zum Übertragen der SRS-Signale ein gemeinsamer Teiler einer Funkrahmenlänge ist;
oder umfassen:
eine Übertragungsperiodizität zum Übertragen der SRS-Signale und einen Versatz eines Teilrahmens zum Übertragen des ersten SRS-Signals in einem Funkrahmen, und Positionsanzeigeinformationen von Teilrahmen, die in einem Funkrahmen enthalten sind, zum jeweiligen Übertragen der erweiterten CP-SRS-Signale oder der normalen CP-SRS-Signale,
die Übertragungsperiodizität zum Übertragen der SRS-Signale und der Versatz des Teilrahmens zum Übertragen des ersten SRS-Signals aus einer ersten von einer Basisstation übertragenen Parameterkonfigurationsmeldung erhalten werden; und
die Positionsanzeigeinformationen von Teilrahmen aus einer zweiten von der Basisstation übertragenen Parameterkonfigurationsmeldung erhalten werden.

3. Verfahren nach Anspruch 1, wobei, wenn die Übertragungspositions-Anzeigeinformationen der erweiterten CP-SRS-Signale und der normalen CP-SRS-Signale umfassen:
eine Übertragungsperiodizität zum Übertragen der SRS-Signale, einen Versatz eines Teilrahmens zum Übertragen des ersten erweiterten CP-SRS-Signals und eine Übertragungsperiodizität zum Übertragen der erweiterten CP-SRS-Signale, wobei die Übertragungsperiodizität zum Übertragen der SRS-Signale ein gemeinsamer Teiler einer Funkrahmenlänge ist und die Übertragungsperiodizität zum Übertragen der erweiterten CP-SRS-Signale ein ganzzahliges Vielfaches der Übertragungsperiodizität zum Übertragen der SRS-Signale ist;
oder umfassen:
eine Übertragungsperiodizität zum Übertragen der SRS-Signale, einen Versatz eines Teilrahmens zum Übertragen des ersten normalen SRS-Signals und eine Übertragungsperiodizität zum Übertragen der normalen CP-SRS-Signale, wobei die Übertragungsperiodizität zum Übertragen der SRS-Signale ein gemeinsamer Teiler einer Funkrahmenlänge ist und die Übertragungsperiodizität zum Übertragen der normalen CP-SRS-Signale ein ganzzahliges Vielfaches der Übertragungsperiodizität zum Übertragen der SRS-Signale ist;
oder umfassen:
eine Übertragungsperiodizität zum Übertragen der SRS-Signale und einen Versatz eines Teilrahmens zum Übertragen des ersten erweiterten CP-SRS-Signals in einem Funkrahmen und eine Übertragungsperiodizität zum Übertragen der erweiterten CP-SRS-Signale in einem Funkrahmen, wobei die Übertragungsperiodizität zum Übertragen der erweiterten CP-SRS-Signale ein ganzzahliges Vielfaches der Übertragungsperiodizität zum Übertragen der SRS-Signale ist;
oder umfassen:
eine Übertragungsperiodizität zum Übertragen der SRS-Signale und einen Versatz eines Teilrahmens zum Übertragen des ersten normalen SRS-Signals in einem Funkrahmen und eine Übertragungsperiodizität zum Übertragen der normalen CP-SRS-Signale in einem Funkrahmen, wobei die Übertragungsperiodizität zum Übertragen der normalen CP-SRS-Signale ein ganzzahliges Vielfaches der Übertragungsperiodizität zum Übertragen der SRS-Signale ist,
die Übertragungsperiodizität zum Übertragen der SRS-Signale und der Versatz des Teilrahmens zum Übertragen des ersten SRS-Signals aus einer ersten von einer Basisstation übertragenen Parameterkonfigurationsmeldung erhalten werden; und
die Übertragungsperiodizität zum Übertragen der erweiterten CP-SRS-Signale oder die Übertragungsperiodizität zum Übertragen der normalen CP-SRS-Signale aus einer zweiten von der Basisstation übertragenen Parameterkonfigurationsmeldung erhalten wird.

4. Verfahren nach Anspruch 1, wobei, wenn die Übertragungspositions-Anzeigeinformationen der erweiterten CP-SRS-Signale und der normalen CP-SRS-Signale umfassen: Sequenznummern von Teilrahmen zum Übertragen der erweiterten CP-SRS-Signale in einem Funkrahmen,
das Bestimmen von Sequenznummern von Teilrahmen zum Übertragen der erweiterten CP-SRS-Signale und der normalen CP-SRS-Signale in jedem Funkrahmen gemäß den Übertragungspositions-Anzeigeinformationen speziell umfasst: das Bestimmen von Sequenznummern von Teilrahmen zum Übertragen der erweiterten CP-SRS-Signale in jedem Funkrahmen gemäß den Sequenznummern von Teilrahmen in den Übertragungspositions-Anzeigeinformationen; und das Bestimmen, dass alle Teilrahmen zum Übertragen der normalen CP-SRS-Signale in jedem Funkrahmen die Teilrahmen sind mit Ausnahme der Teilrahmen zum Übertragen der erweiterten CP-SRS-Signale;
oder
wenn die Übertragungspositions-Anzeigeinformationen der erweiterten CP-SRS-Signale und der normalen CP-SRS-Signale umfassen: Sequenznummern von Teilrahmen zum Übertragen der normalen CP-SRS-Signale in einem Funkrahmen;
das Bestimmen von Sequenznummern von Teilrahmen zum Übertragen der erweiterten CP-SRS-Signale und der normalen CP-SRS-Signale in jedem Funkrahmen gemäß den Übertragungspositions-Anzeigeinformationen speziell umfasst: das Bestimmen von Sequenznummern von Teilrahmen zum Übertragen der normalen CP-SRS-Signale in jedem Funkrahmen gemäß den Sequenznummern von Teilrahmen in den Übertragungspositions-Anzeigeinformationen; und das Bestimmen, dass alle Teilrahmen zum Übertragen der erweiterten CP-SRS-Signale in jedem Funkrahmen die Teilrahmen sind mit Ausnahme der Teilrahmen zum Übertragen der normalen CP-SRS-Signale.

5. Verfahren nach einem der Ansprüche 1 bis 4, wobei:
die Übertragungspositions-Anzeigeinformationen aus einem auf dem mobilen Kommunikationsendgerät vorgespeicherten Konfigurationsparameter oder aus einem von einer Basisstation empfangenen Konfigurationsparameter erhalten werden.

6. Verfahren nach einem der Ansprüche 1 bis 5, ferner umfassend: vor dem Übertragen (S105) der erweiterten CP-SRS-Signale und der normalen CP-SRS-Signale jeweils in dem gleichen Funkrahmen gemäß den Sequenznummern der Teilrahmen zum Übertragen der erweiterten CP-SRS-Signale und der normalen CP-SRS-Signale, Bestätigen, dass Anzeigeinformationen zum Übertragen der erweiterten CP-SRS-Signale von der Basisstation empfangen wurden.

7. Verfahren nach einem der Ansprüche 1 bis 6, wobei das Übertragen (S105) der erweiterten CP-SRS-Signale und der normalen CP-SRS-Signale jeweils in dem gleichen Funkrahmen gemäß den Sequenznummern der Teilrahmen zum Übertragen der erweiterten CP-SRS-Signale und der normalen CP-SRS-Signale speziell umfasst:
Übertragen eines erweiterten CP-SRS-Signals auf einer Zeitspanne von zwei OFDM-Symbolen mit normaler CP-Länge in einem Teilrahmen zum Übertragen des erweiterten CP-SRS-Signals oder auf einer Zeitspanne des letzten OFDM-Symbols mit normaler CP-Länge in dem Teilrahmen zum Übertragen des erweiterten CP-SRS-Signals und des ersten OFDM-Symbols mit normaler CP-Länge in einem benachbarten nächsten Teilrahmen gemäß der Sequenznummer des Teilrahmens zum Übertragen des erweiterten CP-SRS-Signals; und
Übertragen eines normalen CP-SRS-Signals auf einer Zeitspanne von einem OFDM-Symbol mit normaler CP-Länge in einem Teilrahmen zum Übertragen des normalen CP-SRS-Signals gemäß der Sequenznummer des Teilrahmens zum Übertragen des normalen CP-SRS-Signals.

8. Verfahren nach Anspruch 7, wobei ein CP anderer OFDM-Symbole zum Übertragen von Nicht-SRS-Signalen in dem Teilrahmen zum Übertragen des erweiterten CP-SRS-Signals ein CP mit normaler Länge ist.

9. Verfahren nach Anspruch 7, wobei die Zeitdauer von zwei OFDM-Symbolen mit normaler CP-Länge in dem Teilrahmen zum Übertragen des erweiterten CP-SRS-Signals ist: eine Zeitdauer der letzten beiden OFDM-Symbole mit normaler CP-Länge in dem Teilrahmen zum Übertragen des erweiterten CP-SRS-Signals; und
die Zeitdauer eines OFDM-Symbols mit normaler CP-Länge in dem Teilrahmen zum Übertragen des normalen CP-SRS-Signals ist: eine Zeitdauer des letzten OFDM-Symbols mit normaler CP-Länge in dem Teilrahmen zum Übertragen des normalen CP-SRS-Signals.

10. Mobiles Kommunikationsendgerät, **dadurch gekennzeichnet, dass** es umfasst:
eine Einheit zum Erhalten von Übertragungspositions-Anzeigeinformationen von SRS-Signalen, sondierenden Referenzsignalen, mit erweitertem zyklischen Präfix, erweiterten CP-SRS-Signalen, und normalen CP-SRS-Signalen; wobei die Übertragungspositions-Anzeigeinformationen der erweiterten CP-SRS-Signale und der normalen CP-SRS-Signale umfassen: Sequenznummern von Teilrahmen zum Übertragen der erweiterten CP-SRS-Signale und Sequenznummern von Teilrahmen zum Übertragen der normalen CP-SRS-Signale in einem Funkrahmen;
eine Einheit zum Bestimmen von Sequenznummern von Teilrahmen zum Übertragen der erweiterten CP-SRS-Signale und der normalen CP-SRS-Signale in jedem Funkrahmen gemäß den Übertragungspositions-Anzeigeinformationen; und
eine Einheit zum Übertragen der erweiterten CP-SRS-Signale und der normalen CP-SRS-Signale jeweils in dem gleichen Funkrahmen gemäß den Sequenznummern von Teilrahmen zum Übertragen der erweiterten CP-SRS-Signale und der normalen CP-SRS-Signale.

11. Verfahren für eine Basisstation zum Empfangen eines sondierenden Referenzsignals, SRS-Signals, **dadurch gekennzeichnet, dass** es umfasst:
Bestimmen (S101), für ein mobiles Kommunikationsendgerät, von Übertragungspositions-Anzeigeinformationen von SRS-Signalen mit erweitertem zyklischen Präfix, CP-SRS-Signalen, und normalen CP-SRS-Signalen; wobei die Übertragungspositions-Anzeigeinformationen der erweiterten CP-SRS-Signale und der normalen CP-SRS-Signale umfassen: Sequenznummern von Teilrahmen zum Übertragen der erweiterten CP-SRS-Signale und Sequenznummern von Teilrahmen zum Übertragen der normalen CP-SRS-Signale in einem Funkrahmen;
Übertragen (S102) der Übertragungspositions-Anzeigeinformationen an das mobile Kommunikationsendgerät; und
Empfangen (S106) der erweiterten CP-SRS-Signale und der normalen CP-SRS-Signale, die jeweils in dem gleichen Funkrahmen von dem mobilen Kommunikationsendgerät gemäß den Übertragungspositions-Anzeigeinformationen übertragen werden.

12. Verfahren nach Anspruch 11, wobei, wenn die Übertragungspositions-Anzeigeinformationen der erweiterten CP-SRS-Signale und der normalen CP-SRS-Signale umfassen:
eine Übertragungsperiodizität zum Übertragen der SRS-Signale, einen Versatz eines Teilrahmens zum Übertragen des ersten SRS-Signals und Positionsanzeigeinformationen von Teilrahmen, die in einem Funkrahmen enthalten sind, zum jeweiligen Übertragen der erweiterten CP-SRS-Signale oder der normalen CP-SRS-Signale, wobei die Übertragungsperiodizität zum Übertragen der SRS-Signale ein gemeinsamer Teiler einer Funkrahmenlänge ist;
oder umfassen:
eine Übertragungsperiodizität zum Übertragen der SRS-Signale und einen Versatz eines Teilrahmens zum Übertragen des ersten SRS-Signals in einem Funkrahmen und Positionsanzeigeinformationen von Teilrahmen, die in einem Funkrahmen enthalten sind, zum jeweiligen Übertragen der erweiterten CP-SRS-Signale oder der normalen CP-SRS-Signale,
wobei das Übertragen der Übertragungspositions-Anzeigeinformationen an das mobile Kommunikationsendgerät speziell umfasst:
Mitführen der Übertragungsperiodizität zum Übertragen der SRS-Signale und des Versatzes des Teilrahmens zum Übertragen des ersten SRS-Signals in einer ersten Parameterkonfigurationsmeldung und Übertragen der ersten Parameterkonfigurationsmeldung an das mobile Kommunikationsendgerät; und
Mitführen der Positionsanzeigeinformationen von Teilrahmen in einer zweiten Parameterkonfigurationsmeldung und Übertragen der zweiten Parameterkonfigurationsmeldung an das mobile Kommunikationsendgerät.

13. Verfahren nach Anspruch 11, wobei, wenn die Übertragungspositions-Anzeigeinformationen der erweiterten CP-SRS-Signale und der normalen CP-SRS-Signale umfassen:
eine Übertragungsperiodizität zum Übertragen der SRS-Signale, einen Versatz eines Teilrahmens zum Übertragen des ersten erweiterten CP-SRS-Signals und eine Übertragungsperiodizität zum Übertragen der erweiterten CP-SRS-Signale, wobei die Übertragungsperiodizität zum Übertragen der SRS-Signale ein gemeinsamer Teiler einer Funkrahmenlänge ist und die Übertragungsperiodizität zum Übertragen der erweiterten CP-SRS-Signale ein ganzzahliges Vielfaches der Übertragungsperiodizität zum Übertragen der SRS-Signale ist;
oder umfassen:
eine Übertragungsperiodizität zum Übertragen der SRS-Signale, einen Versatz eines Teilrahmens zum Übertragen des ersten normalen SRS-Signals und eine Übertragungsperiodizität zum Übertragen der normalen CP-SRS-Signale, wobei die Übertragungsperiodizität zum Übertragen der SRS-Signale ein gemeinsamer Teiler einer Funkrahmenlänge ist und die Übertragungsperiodizität zum Übertragen der normalen CP-SRS-Signale ein ganzzahliges Vielfaches der Übertragungsperiodizität zum Übertragen der SRS-Signale ist;
oder umfassen:
eine Übertragungsperiodizität zum Übertragen der SRS-Signale und einen Versatz eines Teilrahmens zum Übertragen des ersten erweiterten CP-SRS-Signals in einem Funkrahmen, und eine Übertragungsperiodizität zum Übertragen der erweiterten CP-SRS-Signale in einem Funkrahmen, wobei die Übertragungsperiodizität zum Übertragen des erweiterten CP-SRS-Signals ein ganzzahliges Vielfaches der Übertragungsperiodizität zum Übertragen der SRS-Signale ist;
oder umfassen:
eine Übertragungsperiodizität zum Übertragen der SRS-Signale und einen Versatz eines Teilrahmens zum Übertragen des ersten normalen CP-SRS-Signals in einem Funkrahmen, und eine Übertragungsperiodizität zum Übertragen der normalen CP-SRS-Signale in einem Funkrahmen, wobei die Übertragungsperiodizität zum Übertragen der normalen CP-SRS-Signale ein ganzzahliges Vielfaches der Übertragungsperiodizität zum Übertragen der SRS-Signale ist,
wobei das Übertragen der Übertragungspositions-Anzeigeinformationen an das mobile Kommunikationsendgerät speziell umfasst:
Mitführen der Übertragungsperiodizität zum Übertragen der SRS-Signale und des Versatzes des Teilrahmens zum Übertragen des ersten SRS-Signals in einer ersten Parameterkonfigurationsmeldung und Übertragen der ersten Parameterkonfigurationsmeldung an das mobile Kommunikationsendgerät; und
Mitführen der Übertragungsperiodizität zum Übertragen der erweiterten CP-SRS-Signale oder der Übertragungsperiodizität zum Übertragen der normalen CP-SRS-Signale in einer zweiten Parameterkonfigurationsmeldung und Übertragen der zweiten Parameterkonfigurationsmeldung an das mobile Kommunikationsendgerät.

14. Basisstation, **dadurch gekennzeichnet, dass** sie umfasst:
eine Einheit zum Bestimmen von Übertragungspositions-Anzeigeinformationen von sondierenden Referenzsignalen, SRS-Signalen, mit erweitertem zyklischen Präfix, CP-SRS-Signalen und normalen CP-SRS-Signalen für ein mobiles Kommunikationsendgerät; wobei die Übertragungspositions-Anzeigeinformationen der erweiterten CP-SRS-Signale und der normalen CP-SRS-Signale umfassen: Sequenznummern von Teilrahmen zum Übertragen der erweiterten CP-SRS-Signale und Sequenznummern von Teilrahmen zum Übertragen der normalen CP-SRS-Signale in einem Funkrahmen;
eine Einheit zum Übertragen der Übertragungspositions-Anzeigeinformationen an das mobile Kommunikationsendgerät; und
eine Einheit zum Empfangen der erweiterten CP-SRS-Signale und der normalen CP-SRS-Signale, die jeweils in dem gleichen Funkrahmen von dem mobilen Kommunikationsendgerät gemäß den Übertragungspositions-Anzeigeinformationen übertragen werden.

## Revendications

1. Procédé pour un terminal de communication mobile pour transmettre un signal de référence de sondage (en anglais : Sounding Reference Signal), SRS, **caractérisé en ce qu'**il comprend les étapes consistant à :
obtenir (S103) des informations d'indication de position de transmission de signaux SRS à préfixe cyclique, CP, étendus et de signaux SRS CP normaux ; les informations d'indication de position de transmission des signaux SRS CP étendus et des signaux SRS CP normaux comprenant : des numéros de séquence de sous-trames pour transmettre les signaux SRS CP étendus et des numéros de séquence de sous-trames pour transmettre les signaux SRS CP normaux dans une trame radio ;
déterminer (S104) les numéros de séquence de sous-trames pour transmettre les signaux SRS CP étendus et les signaux SRS CP normaux dans chaque trame radio en fonction des informations d'indication de position de transmission ; et
transmettre (S105) les signaux SRS CP étendus et les signaux SRS CP normaux respectivement dans la même trame radio, en fonction des numéros de séquence de sous-trames pour transmettre les signaux SRS CP étendus et les signaux SRS CP normaux.

2. Procédé selon la revendication 1, dans lequel, si les informations d'indication de position de transmission des signaux SRS CP étendus et des signaux SRS CP normaux comprennent :
une périodicité de transmission pour transmettre les signaux SRS, un décalage d'une sous-trame pour transmettre le premier signal SRS et des informations d'indication de position de sous-trames, contenues dans une trame radio, pour transmettre respectivement les signaux SRS CP étendus ou les signaux SRS CP normaux, la périodicité de transmission pour transmettre les signaux SRS étant un diviseur commun de la longueur d'une trame radio ;
ou comprennent :
une périodicité de transmission pour transmettre les signaux SRS et un décalage d'une sous-trame pour transmettre le premier signal SRS dans une trame radio et des informations d'indication de position de sous-trames, contenues dans une trame radio, pour transmettre respectivement les signaux SRS CP étendus ou les signaux SRS CP normaux,
la périodicité de transmission pour transmettre les signaux SRS et le décalage de la sous-trame pour transmettre le premier signal SRS sont obtenus à partir d'un premier message de configuration de paramètre transmis par une station de base ; et
les informations d'indication de position de sous-trames sont obtenues à partir d'un second message de configuration de paramètre transmis par la station de base.

3. Procédé selon la revendication 1, dans lequel, si les informations d'indication de position de transmission des signaux SRS CP étendus et des signaux SRS CP normaux comprennent :
une périodicité de transmission pour transmettre les signaux SRS, un décalage d'une sous-trame pour transmettre le premier signal SRS CP étendu, et une périodicité de transmission pour transmettre les signaux SRS CP étendus, la périodicité de transmission pour transmettre les signaux SRS étant un diviseur commun d'une longueur de trame radio, et la périodicité de transmission pour transmettre les signaux SRS CP étendus étant un multiple entier de la périodicité de transmission pour transmettre les signaux SRS ;
ou comprennent :
une périodicité de transmission pour transmettre les signaux SRS, un décalage d'une sous-trame pour transmettre le premier signal SRS normal, et une périodicité de transmission pour transmettre les signaux SRS CP normaux, la périodicité de transmission pour transmettre les signaux SRS étant un diviseur commun d'une longueur de trame radio, et la périodicité de transmission pour transmettre les signaux SRS CP normaux étant un multiple entier de la périodicité de transmission pour transmettre les signaux SRS ;
ou comprennent :
une périodicité de transmission pour transmettre les signaux SRS et un décalage d'une sous-trame pour transmettre le premier signal SRS CP étendu dans une trame radio, et une périodicité de transmission pour transmettre les signaux SRS CP étendus dans une trame radio, la périodicité de transmission pour transmettre les signaux SRS CP étendus étant un multiple entier de la périodicité de transmission pour transmettre les signaux SRS ;
ou comprennent :
une périodicité de transmission pour transmettre les signaux SRS et un décalage d'une sous-trame pour transmettre le premier signal SRS normal dans une trame radio, et une périodicité de transmission pour transmettre les signaux SRS CP normaux dans une trame radio, la périodicité de transmission pour transmettre les signaux SRS CP normaux étant un multiple entier de la périodicité de transmission pour transmettre les signaux SRS,
la périodicité de transmission pour transmettre les signaux SRS et le décalage de la sous-trame pour transmettre le premier signal SRS sont obtenus à partir d'un premier message de configuration de paramètre transmis par une station de base ; et
la périodicité de transmission pour transmettre les signaux SRS CP étendus ou la périodicité de transmission pour transmettre les signaux SRS CP normaux est obtenue à partir d'un second message de configuration de paramètre transmis par la station de base.

4. Procédé selon la revendication 1, dans lequel, si les informations d'indication de position de transmission des signaux SRS CP étendus et des signaux SRS CP normaux comprennent : des numéros de séquence de sous-trames pour transmettre les signaux SRS CP étendus dans une trame radio,
l'étape consistant à déterminer des numéros de séquence de sous-trames pour transmettre les signaux SRS CP étendus et les signaux SRS CP normaux dans chaque trame radio en fonction des informations d'indication de position de transmission comprend spécifiquement les étapes consistant à : déterminer des numéros de séquence de sous-trames pour transmettre les signaux SRS CP étendus dans chaque trame radio en fonction des numéros de séquence de sous-trames dans les informations d'indication de position de transmission ; et déterminer que les sous-trames pour transmettre les signaux SRS CP normaux dans chaque trame radio sont toutes les sous-trames sauf les sous-trames pour transmettre les signaux SRS CP étendus ;
ou
si les informations d'indication de position de transmission des signaux SRS CP étendus et des signaux SRS CP normaux comprennent : des numéros de séquence de sous-trames pour transmettre les signaux SRS CP normaux dans une trame radio ;
l'étape consistant à déterminer des numéros de séquence de sous-trames pour transmettre les signaux SRS CP étendus et les signaux SRS CP normaux dans chaque trame radio en fonction des informations d'indication de position de transmission comprend spécifiquement les étapes consistant à : déterminer des numéros de séquence de sous-trames pour transmettre les signaux SRS CP normaux dans chaque trame radio en fonction des numéros de séquence de sous-trames dans les informations d'indication de position de transmission ; et déterminer que les sous-trames pour transmettre les signaux SRS CP étendus dans chaque trame radio sont toutes les sous-trames sauf les sous-trames pour transmettre les signaux SRS CP normaux.

5. Procédé de l'une quelconque des revendications 1 à 4, dans lequel :
les informations d'indication de position de transmission sont obtenues à partir d'un paramètre de configuration préenregistré sur le terminal de communication mobile ou d'un paramètre de configuration reçu d'une station de base.

6. Procédé selon l'une quelconque des revendications 1 à 5, comprenant en outre l'étape consistant à : avant de transmettre (S105) les signaux SRS CP étendus et les signaux SRS CP normaux respectivement dans la même trame radio, en fonction des numéros de séquence de sous-trames pour transmettre les signaux SRS CP étendus et les signaux SRS CP normaux, confirmer que des informations d'indication pour transmettre les signaux SRS CP étendus sont reçues de la station de base.

7. Procédé selon l'une quelconque des revendications 1 à 6, dans lequel l'étape consistant à transmettre (S105) les signaux SRS CP étendus et les signaux SRS CP normaux respectivement dans la même trame radio, en fonction des numéros de séquence de sous-trames pour transmettre les signaux SRS CP étendus et les signaux SRS CP normaux, comprend spécifiquement les étapes consistant à :
transmettre un signal SRS CP étendu sur une durée de deux symboles OFDM de longueur de CP normale dans une sous-trame pour transmettre le signal SRS CP étendu ou sur une durée du dernier symbole OFDM de longueur de CP normale dans la sous-trame pour transmettre le signal SRS CP étendu et le premier symbole OFDM de longueur de CP normale dans une sous-trame adjacente suivante, en fonction du numéro de séquence de la sous-trame pour transmettre le signal SRS CP étendu ; et
transmettre un signal SRS CP normal sur une durée d'un symbole OFDM de longueur de CP normale dans une sous-trame pour transmettre le signal SRS CP normal, en fonction du numéro de séquence de la sous-trame pour transmettre le signal SRS CP normal.

8. Procédé selon la revendication 7, dans lequel un CP d'autres symboles OFDM pour transmettre des signaux non SRS dans la sous-trame pour transmettre le signal SRS CP étendu est un CP de longueur normale.

9. Procédé selon la revendication 7, dans lequel la durée de deux symboles OFDM de longueur de CP normale dans la sous-trame pour transmettre le signal SRS CP étendu est : une durée des deux derniers symboles OFDM de longueur de CP normale dans la sous-trame pour transmettre le signal SRS CP étendu ; et
la durée d'un symbole OFDM de longueur de CP normale dans la sous-trame pour transmettre le signal SRS CP normal est : une durée du dernier symbole OFDM de longueur de CP normale dans la sous-trame pour transmettre le signal SRS CP normal.

10. Terminal de communication mobile, **caractérisé en ce qu'**il comprend :
une unité pour obtenir des informations d'indication de position de transmission de signaux SRS à préfixe cyclique, CP, étendus et de signaux SRS CP normaux ; les informations d'indication de position de transmission des signaux SRS CP étendus et des signaux SRS CP normaux comprenant : des numéros de séquence de sous-trames pour transmettre les signaux SRS CP étendus et des numéros de séquence de sous-trames pour transmettre les signaux SRS CP normaux dans une trame radio ;
une unité pour déterminer des numéros de séquence de sous-trames pour transmettre les signaux SRS CP étendus et les signaux SRS CP normaux dans chaque trame radio en fonction des informations d'indication de position de transmission ; et
une unité pour transmettre les signaux SRS CP étendus et les signaux SRS CP normaux respectivement dans la même trame radio, en fonction des numéros de séquence de sous-trames pour transmettre les signaux SRS CP étendus et les signaux SRS CP normaux.

11. Procédé pour une station de base destinée à recevoir un signal de référence de sondage (en anglais : Sounding Reference Signal), SRS, **caractérisé en ce qu'**il comprend les étapes consistant à :
déterminer (S101), pour un terminal de communication mobile, des informations d'indication de position de transmission de signaux SRS à préfixe cyclique, CP, étendus et de signaux SRS CP normaux ; les informations d'indication de position de transmission des signaux SRS CP étendus et des signaux SRS CP normaux comprenant : des numéros de séquence de sous-trames pour transmettre les signaux SRS CP étendus et des numéros de séquence de sous-trames pour transmettre les signaux SRS CP normaux dans une trame radio ;
transmettre (S102) les informations d'indication de position de transmission au terminal de communication mobile ; et
recevoir (S106) les signaux SRS CP étendus et les signaux SRS CP normaux respectivement transmis dans la même trame radio par le terminal de communication mobile en fonction des informations d'indication de position de transmission.

12. Procédé selon la revendication 11, dans lequel, si les informations d'indication de position de transmission des signaux SRS CP étendus et des signaux SRS CP normaux comprennent :
une périodicité de transmission pour transmettre les signaux SRS, un décalage d'une sous-trame pour transmettre le premier signal SRS et des informations d'indication de position de sous-trames, contenues dans une trame radio, pour transmettre respectivement les signaux SRS CP étendus ou les signaux SRS CP normaux, la périodicité de transmission pour transmettre les signaux SRS étant un diviseur commun d'une longueur de trame radio ;
ou comprennent :
une périodicité de transmission pour transmettre les signaux SRS et un décalage d'une sous-trame pour transmettre le premier signal SRS dans une trame radio et des informations d'indication de position de sous-trames, contenues dans une trame radio, pour transmettre respectivement les signaux SRS CP étendus ou les signaux SRS CP normaux,
l'étape consistant à transmettre les informations d'indication de position de transmission au terminal de communication mobile comprend spécifiquement les étapes consistant à :
transporter la périodicité de transmission pour transmettre les signaux SRS et le décalage de la sous-trame pour transmettre le premier signal SRS dans un premier message de configuration de paramètre et transmettre le premier message de configuration de paramètre au terminal de communication mobile ; et
transporter les informations d'indication de position de sous-trames dans un second message de configuration de paramètre et transmettre le second message de configuration de paramètre au terminal de communication mobile.

13. Procédé selon la revendication 11, dans lequel, si les informations d'indication de position de transmission des signaux SRS CP étendus et des signaux SRS CP normaux comprennent :
une périodicité de transmission pour transmettre les signaux SRS, un décalage d'une sous-trame pour transmettre le premier signal SRS CP étendu et une périodicité de transmission pour transmettre les signaux SRS CP étendus, la périodicité de transmission pour transmettre les signaux SRS étant un diviseur commun d'une longueur de trame radio et la périodicité de transmission pour transmettre les signaux SRS CP étendus étant un multiple entier de la périodicité de transmission pour transmettre les signaux SRS ;
ou comprennent :
une périodicité de transmission pour transmettre les signaux SRS, un décalage d'une sous-trame pour transmettre le premier signal SRS normal et une périodicité de transmission pour transmettre les signaux SRS CP normaux, la périodicité de transmission pour transmettre les signaux SRS étant un diviseur commun d'une longueur de trame radio et la périodicité de transmission pour transmettre les signaux SRS CP normaux étant un multiple entier de la périodicité de transmission pour transmettre les signaux SRS ;
ou comprennent :
une périodicité de transmission pour transmettre les signaux SRS et un décalage d'une sous-trame pour transmettre le premier signal SRS CP étendu dans une trame radio, et une périodicité de transmission pour transmettre les signaux SRS CP étendus dans une trame radio, la périodicité de transmission pour transmettre le signal SRS CP étendu étant un multiple entier de la périodicité de transmission pour transmettre les signaux SRS ;
ou comprennent :
une périodicité de transmission pour transmettre les signaux SRS et un décalage d'une sous-trame pour transmettre le premier signal SRS CP normal dans une trame radio, et une périodicité de transmission pour transmettre les signaux SRS CP normaux dans une trame radio, la périodicité de transmission pour transmettre les signaux SRS CP normaux étant un multiple entier de la périodicité de transmission pour transmettre les signaux SRS,
l'étape consistant à transmettre les informations d'indication de position de transmission au terminal de communication mobile comprend spécifiquement les étapes consistant à :
transporter la périodicité de transmission pour transmettre les signaux SRS et le décalage de la sous-trame pour transmettre le premier signal SRS dans un premier message de configuration de paramètre et transmettre le premier message de configuration de paramètre au terminal de communication mobile ; et
transporter la périodicité de transmission pour transmettre les signaux SRS CP étendus ou la périodicité de transmission pour transmettre les signaux SRS CP normaux dans un second message de configuration de paramètre et transmettre le second message de configuration de paramètre au terminal de communication mobile.

14. Station de base, **caractérisée en ce qu'**elle comprend :
une unité pour déterminer, pour un terminal de communication mobile, des informations d'indication de position de transmission de signaux SRS à préfixe cyclique, CP, étendus et de signaux SRS CP normaux ; les informations d'indication de position de transmission des signaux SRS CP étendus et des signaux SRS CP normaux comprenant : des numéros de séquence de sous-trames pour transmettre les signaux SRS CP étendus et des numéros de séquence de sous-trames pour transmettre les signaux SRS CP normaux dans une trame radio ;
une unité pour transmettre les informations d'indication de position de transmission au terminal de communication mobile ; et
une unité pour recevoir les signaux SRS CP étendus et les signaux SRS CP normaux respectivement transmis dans la même trame radio par le terminal de communication mobile en fonction des informations d'indication de position de transmission.
